# EUROPEAN PATENT APPLICATION

(11) **EP 4 576 496 A1**
(43) Date of publication of application: **25.06.2025**
(21) Application number: 24220727.2
(22) Date of filing: 17.12.2024
(51) Int. Cl.: H02J 50/00, H01F 38/14, H02J 50/10

(54) **UNDERWATER MODULE CHARGING**

(30) Priority: 18.12.2023 US 202363611240 P
(71) Applicant: Solace Power Inc., Mount Pearl, Newfoundland and Labrador A1N 5E7 (CA)
(72) Inventor: HANSEN, Noah, Mount Pearl, A1N 5E7 (CA); ALMUDALLAL, Ahmad, Mount Pearl, A1N 5E7 (CA)
(74) Representative: Marks & Clerk LLP

(57) **Abstract**

There is provided vehicle module adapted for underwater use comprising a housing enclosing a receiver of a wireless power transfer system. The receiver comprises a receiver coil positioned adjacent an inner surface of the housing and radially aligned with the housing. The receiver coil is for extracting power from a field generated by a transmitter coil of a transmitter of a wireless power transfer system when the transmitter coil at least partially surrounds the housing and is radially aligned with the receiver coil.

## Description

### Field

The subject disclosure relates generally to wireless power transfer, and in particular to underwater wireless power transfer.

### Background

Wireless power transfer systems such as wireless charging are becoming an increasingly important technology to enable the next generation of devices. The potential benefits and advantages offered by the technology is evident by the increasing number of manufacturers and companies investing in the technology.

Various wireless power transfer systems are known. A typical wireless power transfer system includes a power source electrically connected to a wireless power transmitter, and a wireless power receiver electrically connected to a load.

In magnetic induction systems, the transmitter has a transmitter coil with a certain inductance that transfers electrical energy from the power source to the receiver, which has a receiver coil with a certain inductance. Power transfer occurs due to coupling of magnetic fields between the coils or inductors of the transmitter and receiver. The range of these magnetic induction systems is limited, and the coils or inductors of the transmitter and receiver must be tightly coupled, i.e., have a coupling factor above 0.5 and be in optimal alignment for efficient power transfer.

There also exist resonant magnetic systems in which power is transferred due to coupling of magnetic fields between the coils or inductors of the transmitter and receiver. The transmitter and receiver inductors may be loosely coupled, i.e., have a coupling factor below 0.5. However, in resonant magnetic systems the inductors are resonated using at least one capacitor. Furthermore, in resonant magnetic systems, the transmitter is self-resonant and the receiver is self-resonant. The range of power transfer in resonant magnetic systems is increased over that of magnetic induction systems and alignment issues are rectified. While electromagnetic energy is produced in magnetic induction and resonant magnetic systems, the majority of power transfer occurs via the magnetic field. Little, if any, power is transferred via electric induction or resonant electric induction.

In electrical induction systems, the transmitter and receiver have capacitive electrodes. Power transfer occurs due to coupling of electric fields between the capacitive electrodes of the transmitter and receiver. Similar, to resonant magnetic systems, there exist resonant electric systems in which the capacitive electrodes of the transmitter and receiver are made resonant using at least one inductor. The inductor may be a coil. In resonant electric systems, the transmitter is self-resonant and the receiver is self-resonant. Resonant electric systems have an increased range of power transfer compared to that of electric induction systems and alignment issues are rectified. While electromagnetic energy is produced in electric induction and resonant electric systems, the majority of power transfer occurs via the electric field. Little, if any, power is transferred via magnetic induction or resonant magnetic induction.

While some wireless power transfer systems are known, improvements are desired. It is therefore an object to provide a novel wireless power transfer transmitter, receiver, system and method of wirelessly transferring power.

This background serves only to set a scene to allow a person skilled in the art to better appreciate the following description. Therefore, none of the above discussion should necessarily be taken as an acknowledgement that the discussion is part of the state of the art or is common general knowledge. One or more aspects/embodiments of the invention may or may not address one or more of the background issues.

### Summary

Accordingly, in one aspect there is provided a module adapted for underwater use comprising a housing enclosing a receiver of a wireless power transfer system. The receiver comprises a receiver coil positioned adjacent an inner surface of the housing and radially aligned with the housing. The receiver is for extracting power from a field generated by a transmitter coil of a transmitter of a wireless power transfer system when the transmitter coil at least partially surrounds the housing and is radially aligned with the receiver coil.

The module may be for use underwater. Thus, the module may be sealed such that it may be submerged without fluid ingress into the housing. Further, the module may be adapted such that it may be lowered to significant depths and withstand underwater pressures. The housing may be pressure rated to within pressures exerted in a subsea environment.

The vehicle may be unmanned. The module may be a vehicle. The vehicle may be unmanned. The vehicle may be an underwater vehicle. In other words, the vehicle may be configured for use underwater. The housing may be sealed to prevent water ingress/egress. The housing may be cylindrical. The vehicle may be remotely and/or autonomously operated for motion and/or data collection when deployed. The vehicle may be deployed for operation at the water level or subsea.

In another aspect there is provided an vehicle module adapted for underwater use comprising a cylindrical housing enclosing a receiver of a wireless power transfer system, the receiver comprising a receiver coil positioned adjacent an inner surface of the cylindrical housing and radially aligned with the cylindrical housing, the receiver coil for extracting power from a field generated by a transmitter coil of a transmitter of a wireless power transfer system when the transmitter coil at least partially surrounds the cylindrical housing and is radially aligned with the receiver coil.

The receiver coil is arranged within the cylindrical housing to be adjacent the inner surface of the cylindrical housing. The receiver coil comprises a plurality of windings. The windings form the coil by circling along the inner surface of the housing. In this way, the receiver coil is proximate the inner surface of the housing. The receiver coil may be in contact with the inner surface of the housing. In other words, the receiver coil may be in contact with the cylindrical inner wall of the housing.

Electrical power may be transferred from a field generated by a transmitter coil to the receiver coil when the transmitter coil at least partially surrounds the cylindrical housing and is radially aligned with the receiver coil. The transmitter coil may be proximate an outer surface or outer wall of the cylindrical housing. During power transfer, the transmitter and receiver coil may be in the same radial plane defined by the coils. The radial plane may extend through the cylindrical housing.

The described receiver coil may comprise a plurality of windings. The receiver coil may be defined by the windings.

The windings may be positioned adjacent the inner surface of the cylindrical housing. The windings may be radially aligned with the cylindrical housing.

Each winding of the plurality of windings may be positioned adjacent the inner surface of the cylindrical housing. Each winding of the plurality of windings may be radially aligned with the cylindrical housing.

The receiver coil may be adapted to extract power from a field generated by a transmitter coil when a plurality of windings of the transmitter coil at least partially surrounds the cylindrical housing and is radially aligned with the plurality of windings of the receiver coil.

The module may further comprise:
a metallic element within the cylindrical housing for protecting a transmitter of a wireless power transfer system from electrical damage.

The metallic element may couple to a transmitter coil of a transmitter of a wireless power transfer system when the transmitter coil at least partially surrounds the cylindrical housing and is radially aligned with the metallic element.

Coupling of the metallic element and transmitter coil may result in an electrical fault at the transmitter.

The metallic element may be positioned within an end portion of the cylindrical housing.

The metallic element may comprise a tube.

The housing may comprise a fastener for connection to a cable for extracting the housing from an environment.

The fastener may extend from an external surface of the housing.

The fastener may extend from an end face of the housing. The housing may comprise a cylindrical wall extending between two end faces. The fastener may extend from one of the end faces.

The receiver may further comprise a load electrically connected to the receiver coil.

The load may further comprise a sensor. The load may further comprise a battery. The battery may be rechargeable. Power transfer from the transmitter coil to the receiver coil may be for recharging the power and/or powering the sensor.

The module may comprise a communication component. The communication component may form part of the receiver. The communication component may be for communicating a parameter. The parameter may comprise an operating parameter of the receiver. The operating parameter may comprise a voltage at the receiver. The receiver may comprise the rectified voltage at the receiver.

According to another aspect there is provided a wireless power transfer system comprising:
a transmitter comprising a transmitter coil; and
the described module.

The module may be unmanned. The module may comprise a vehicle. The vehicle may be an unmanned vehicle. The vehicle may be an underwater vehicle in that the vehicle is adapted for use underwater. The module/vehicle may comprise a housing. The housing may be cylindrical. The housing may be for enclosing a receiver of a wireless power transfer system, the receiver comprising a receiver coil positioned adjacent an inner surface of the cylindrical housing and radially aligned with the cylindrical housing, the receiver coil for extracting power from a field generated by the transmitter coil when the transmitter coil at least partially surrounds the cylindrical housing and is radially aligned with the receiver coil.

Similar to the above described module, the module of the system may be sealed and pressure rated for subsea use.

The system may further comprise:
a transmitter housing enclosing the transmitter. The transmitter housing may comprise a hollow cylinder or tube.

The transmitter housing may be adapted to receive the cylindrical housing therein. The cylindrical housing may be received within the hollow opening within the transmitter housing. The outer water of the cylindrical housing may be proximate with the inner surface of the transmitter housing.

An inner radius of the transmitter housing may be greater than an outer radius of the cylindrical housing.

The transmitter coil may be adjacent the inner surface of the transmitter housing and radially aligned with the transmitter housing.

The transmitter coil may comprise a plurality of windings.

The windings may be positioned adjacent the inner surface of the transmitter housing. The windings may be radially aligned with the transmitter housing.

Each winding of the plurality of windings may be positioned adjacent the inner surface of the transmitter housing. Each winding of the plurality of windings may be radially aligned with the transmitter housing.

The transmitter coil may be adapted to transfer power to the receiver when the plurality of windings of the transmitter coil at least partially surrounds the cylindrical housing and is radially aligned with the plurality of windings of the receiver coil.

The system may further comprise:
a lifting arrangement for lifting the module from an environment and positioning the cylindrical housing within the transmitter housing.

The lifting arrangement may comprise a cable connectable to a connector associated with the cylindrical housing.

The module may comprise a communication component. The communication component may form part of the receiver. The communication component may be for communicating a parameter. The parameter may comprise an operating parameter of the receiver. The operating parameter may comprise a voltage at the receiver. The receiver may comprise the rectified voltage at the receiver.

The transmitter may comprise a communication component. The communication component of the transmitter may be for receiving a parameter communicated by the communication component of the receiver.

The transmitter may comprise a controller. The controller may control an output power signal of the transmitter. The controller may control a field strength of the magnetic field generated by the transmitter coil. The controller may control the field strength/output power level based on the parameter received by the transmitter communication component. In this way, the transmitter may increase or decrease an output power level based on a rectified voltage at the receiver.

According to another aspect there is provided a method of transferring power wirelessly from a transmitter to a receiver of a wireless power transfer system, the receiver comprising a receiver coil, the receiver enclosed in a housing, the receiver coil positioned adjacent an inner surface of the housing and radially aligned with the housing, the method comprising:
extracting power, via the receiver coil, from a field generated by a transmitter coil of the transmitter when the transmitter coil at least partially surrounds the housing and is radially aligned with the receiver coil.

The housing may be a cylindrical housing.

The method may further comprise:
detecting, at the receiver, that the transmitter coil at least partially surrounds the cylindrical housing and is radially aligned with the receiver coil.

The method may further comprise:
communicating, from the receiver to the transmitter, a parameter of a wireless link between the transmitter and receiver coils. The communicating may be performed via a communication component at the receiver and a communication component at the transmitter.

The method may further comprise:
transitioning, at the transmitter, from a search mode to a power transfer mode in response to receiving the communicated parameter. In the search mode, the transmitter may generate a low power search signal. In the power transfer mode, the transmitter may generate a high power, i.e., higher power than the search signal, power transfer signal.

The method may further comprise:
positioning the cylindrical housing within a transmitter housing enclosing the transmitter to at least partially surround the cylindrical housing with the transmitter coil and radially aligning the transmitter coil with the receiver coil.

The method may further comprise:
positioning the cylindrical housing within a transmitter housing enclosing the transmitter to at least partially surround a portion of the cylindrical housing enclosing a metallic element.

The method may further comprise:
in response to the positioning, tripping the transmitter to stop generating a field for wireless power transfer.

According to another aspect there is provided a controller adapted to perform the described method. The controller may comprise a processor and/or computer-readable storage medium. The processor may be adapted to execute computer program code stored on the storage medium. The program code may be for executing one or more steps of the described method. The controller may control the transmitter and receiver. The controller may further control a crane for connection to the cylindrical housing and for positioning the cylindrical housing within the transmitter housing.

According to another aspect there is provided a non-transitory computer-readable storage medium having program code stored therein, the program code when executed by a processor performing the described method.

It should be understood that any features described in relation to one aspect, example or embodiment may also be used in relation to any other aspect, example or embodiment of the present disclosure. Other advantages of the present disclosure may become apparent to a person skilled in the art from the detailed description in association with the following drawings.

### Brief Description of the Drawings

Embodiments will now be described more fully with reference to the accompanying drawings in which:
Figure 1 is a block diagram of a wireless power transfer system;
Figure 2 is another block diagram of a wireless power transfer system;
Figure 3 is a perspective view of a portion of a wireless power transfer system in accordance with an aspect of the disclosure;
Figure 4 is another perspective view of a portion of a wireless power transfer system;
Figure 5a is a perspective view of the portion of the wireless power transfer system of Figure 4;
Figure 5b is a perspective view of certain elements of the wireless power transfer system of Figure 4;
Figure 6 is a perspective view of a portion of a receiver in accordance with an aspect of the disclosure;
Figure 7 is a perspective view of a portion of a transmitter in accordance with an aspect of the disclosure;
Figure 8a is a plot of radio frequency (RF) efficiency compared to axial misalignment of a wireless power system in accordance with an aspect of the disclosure; and
Figure 8b is a plot of coupling impedance (X21) compared to axial misalignment of a wireless power system in accordance with an aspect of the disclosure.

### Detailed Description

The foregoing summary, as well as the following detailed description of certain examples will be better understood when read in conjunction with the appended drawings. As used herein, an element or feature introduced in the singular and preceded by the word "a" or "an" should be understood as not necessarily excluding the plural of the elements or features. Further, references to "one example" or "one embodiment" are not intended to be interpreted as excluding the existence of additional examples or embodiments that also incorporate the described elements or features. Moreover, unless explicitly stated to the contrary, examples or embodiments "comprising" or "having" or "including" an element or feature or a plurality of elements or features having a particular property may include additional elements or features not having that property. Also, it will be appreciated that the terms "comprises", "has", "includes" means "including but not limited to" and the terms "comprising", "having" and "including" have equivalent meanings. It will also be appreciated that like reference characters will be used to refer to like elements throughout the description and drawings.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, and/or designed for the purpose of performing the function. It is also within the scope of the subject application that elements, components, and/or other subject matter that is described as being adapted to perform a particular function may additionally or alternatively be described as being configured to perform that function, and vice versa. Similarly, subject matter that is described as being configured to perform a particular function may additionally or alternatively be described as being operative to perform that function.

It will be understood that when an element is referred to as being "on," "attached" to, "connected" to, "coupled" with, "contacting," etc., another element, it can be directly on, attached to, connected to, coupled with, or contacting the other element or intervening elements may also be present.

It should be understood that use of the word "exemplary", unless otherwise stated, means `by way of example' or 'one example', rather than meaning a preferred or optimal design or implementation.

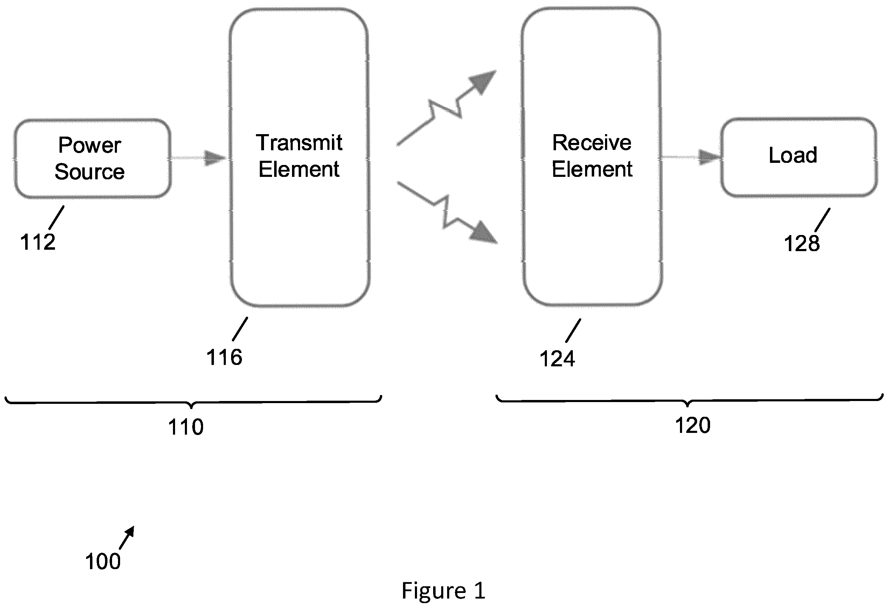

Turning now to Figure 1, a wireless power transfer system generally identified by reference numeral 100 is shown. The wireless power transfer system 100 comprises a transmitter 110 comprising a power source 112 electrically connected to a transmit element 116, and a receiver 120 comprising a receive element 124 electrically connected to a load 128. Power is transferred from the power source 112 to the transmit element 116. The power is then transferred from the transmit element 116 to the receive element 124 via resonant or non-resonant electric or magnetic field coupling. The power is then transferred from the receive element 124 to the load 128. Exemplary wireless power transfer systems 100 include a high frequency inductive wireless power transfer system as described in applicant's US Patent Application Publication No 2021/0083634 A1, or a resonant capacitively coupled wireless power transfer system as described in applicant's US Patent No 9653948 B2.

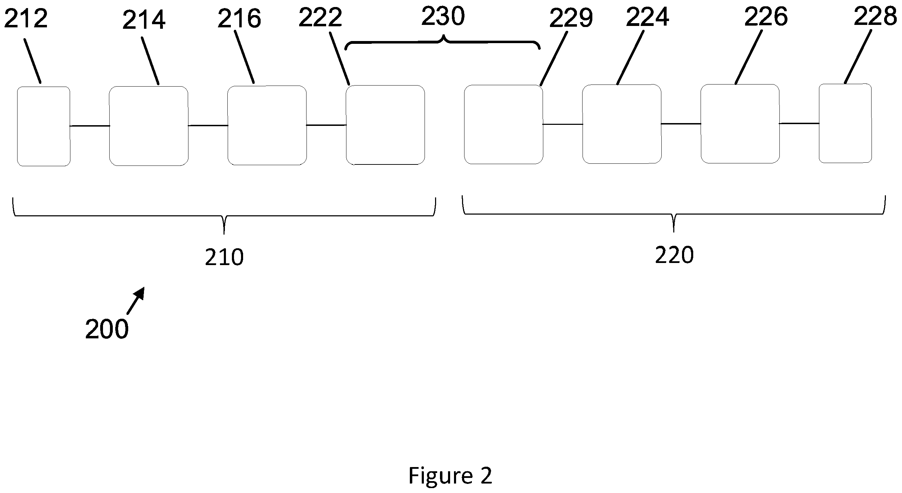

Turning now to Figure 2, another embodiment of a wireless power transfer system is shown generally identified as reference numeral 200. The wireless power transfer system 200 comprises a power supply 212, DC/DC converter 214, circuitry 216, and transmitter element 222. The power supply 212 is electrically connected to the DC/DC converter 214. The DC/DC converter 214 is electrically connected to circuitry 216. The circuitry 216 is electrically connected to the transmitter element 222.

The power supply 212 is for generating an input power signal for transmission of power. In this embodiment, the input power signal is a direct current (DC) power signal.

The DC/DC converter 214 is for converting a received DC voltage signal to a desired voltage level. The received DC voltage may be from the power supply 212. The system 200 is illustrated as comprising the DC/DC converter 214, one of skill in the art will appreciate other configurations are possible. In another embodiment, no DC/DC converter is present.

In the illustrated arrangement, the circuitry 216 comprises an inverter and an output stage. The output stage matches the output impedance of the circuitry 216 to the optimum impedance of a wireless link 230 between the transmitter and receiver. The output stage also filters high frequency harmonic components of the inverter. As one of skill in the art will appreciate, the circuitry 216 may comprise only an inverter with no output stage being present.

The transmitter element 222 comprises one or more inductive elements, i.e., inductors. The inductive elements may comprise one or more coils. The coils may include booster or shield coils such as described in applicant's US Patent Application No 17/193539.

In another arrangement, the transmitter element 222 comprise one or more capacitive elements, e.g., capacitive electrodes. The capacitive electrodes may be laterally spaced, elongate electrodes; however, one of skill in the art will appreciate that other configurations are possible including, but not limited to, concentric, coplanar, circular, elliptical, disc, etc., electrodes. Other suitable electrode configurations are described in applicant's US Patent No 9979206B2. As one of skill in the art will appreciate, the transmitter element 222 may comprise a combination of inductive and capacitive elements.

The power source 212 supplies a DC input power signal to the DC/DC converter 214 which converts the signal to a desired voltage level. The inverter of the circuitry 216 receives the converted DC power signal and inverts the converted DC power signal to generate a magnetic and/or electric field at the transceiver element 222 to transfer power via electric or magnetic field coupling. Specifically, the transmitter element 222 generates a magnetic/electric field to transfer power to the receiver via magnetic/electric field coupling. The power source 212, DC/DC converter 214, circuitry 216 and transmitter element 222 may collectively form a transmitter 210. As previously stated, the DC/DC converter 214 may not be present in the transmitter 210.

The wireless power transfer system 200 further comprises load 228, DC/DC converter 226, circuitry 224, and receiver element 229. The load 228 is electrically connected to the DC/DC converter 226. The DC/DC converter 226 is electrically connected to circuitry 224. The circuitry 224 is electrically connected to the receiver element 229.

In the illustrated arrangement, the load 228 is a DC load. The load 228 may be static or variable.

The DC/DC converter 226 is for converting a received DC voltage signal to a desired voltage level. The received DC voltage may be from the circuitry 224. While the system 200 comprises the DC/DC converter 226, one of skill in the art will appreciate other configurations are possible. In another embodiment, no DC/DC converter 226 is present.

The circuitry 224 comprises an input stage and a rectifier, e.g., diode rectifier or synchronous rectifier. The input stage is configured to ensure optimum impedance presented to the receiver element 229 at the full power state of the wireless power transfer system 200. The input stage may also preserve the quasi-voltage source behaviour of the receiver element 229 so the output of the synchronous rectifier exhibits a stable DC voltage from no load to full load conditions. As one of skill in the art will appreciate, the circuitry 224 may comprise only a rectifier with no input stage being present.

The receiver element 229 comprises one or more inductive elements, i.e., inductors. The receiver element 229 may comprise one or more coils. The coils may include booster or shield coils such as described in applicant's US Patent Application No 17/193539.

In another arrangement, the transmitter element 222 comprise one or more capacitive elements, e.g., capacitive electrodes. The capacitive electrodes may be laterally spaced, elongate electrodes; however, one of skill in the art will appreciate that other configurations are possible including, but not limited to, concentric, coplanar, circular, elliptical, disc, etc., electrodes. Other suitable electrode configurations are described in applicant's US Patent No 9979206B2. As one of skill in the art will appreciate, the transmitter element 222 may comprise a combination of inductive and capacitive elements.

The transmitter and receiver elements 222, 229 of the system 200 form the wireless link 230. The elements 222, 229 are separated by a wireless gap. The wireless gap may be formed by atmosphere, i.e. air, or by a physical medium, e.g., walls, glass, liquids, wood, insulations, etc.. Power is transferred from one element to the other across the wireless link 230 via resonant or non-resonant magnetic and/or electric field coupling, i.e., electric or magnetic induction.

During operation, the receiver element 229 extracts power from a magnetic and/or electric field generated by the transmitter element 222. The circuitry 224 acts as a rectifier, e.g., diode rectifier or synchronous rectifier, and rectifies the received power signal. The DC/DC converter 226 converts the rectified power signal to the desired power level which is received by the load 228. In this way, the receiver element 229 extracts power transmitted by the transmitter element 222 (transmitter 210) such that electrical power is transferred to the load 228 via magnetic/electric field coupling. The load 228, DC/DC converter 226, circuitry 224 and receiver element 229 may collectively form a receiver 220. As previously stated, the DC/DC converter 226 may not be present in the receiver 220.

In magnetic field coupling, the inverter (DC/AC inverter) of the circuitry 216 of the transmitter 210 is configured to convert the DC power signal from the DC/DC converter 214 into a sinusoidal RF power signal. The sinusoidal RF power signal is output from the DC/AC converter to the transmitter element 222. In the case of magnetic field coupling, the transmitter element 222 comprises a coil, i.e., a plurality of windings forming at least one coil.

The DC/AC inverter of the circuitry 216 drives the transmitter coil with a sinusoidal alternating current (AC). The transmitter coil is configured to generate an inductive (magnetic) field and to transfer power via inductive (magnetic) field coupling. The DC/AC inverter takes a DC input voltage and converts it to an AC current to drive the transmitter coil.

The described wireless power transfer system may be used in a variety of applications. For example, sensors may be used in oceanographic operations in which the sensors are affixed to equipment to monitor the ocean or other bodies of water. For example, monitoring ocean currents, seabed geology and physical properties within oceans. Such a sensor may be enclosed within a module which is submerged to collect information of the surrounding fluid. The module may additionally include a battery to power on board electronics. Once electrical power is depleted from the battery, it may be necessary to remove the module from the water and replace the battery or recharge the battery. During offshore operations, it may be difficult to remove the sensor module from the water, open the sensor module casing, remove the depleted battery, and insert a fully charged replacement battery. This may take significant time and put workers and equipment at risk. An alternative may be to connect the module to a power source to charge the battery. However, having cabling running on a vessel and making the required physical connection to the sensor module may again be difficult, time-consuming, and put individuals and equipment at risk.

As such, it may be preferable to replace these systems with a wireless power transfer system. Such a system may take less time to configure for charging of a depleted battery and may be less risky for workers and equipment. Additionally, a wireless power transfer system may eliminate the requirement for a potential water ingress point to the sensor module. Water ingress may damage sensitive electronics contained within the sensor module. Salt water, in particular, may be particularly damaging.

Additionally, in order to charge the battery in the module it may be necessary to connect an external connector to a power source via a cable. The external connector is connected to a corresponding cable connector. Both connectors may be waterproof, but they may still wear out from use and exposure to salt water, etc. Further, such connectors require workers to manually connect the cable to the module which may be difficult at sea, and costs money while putting people at risk.

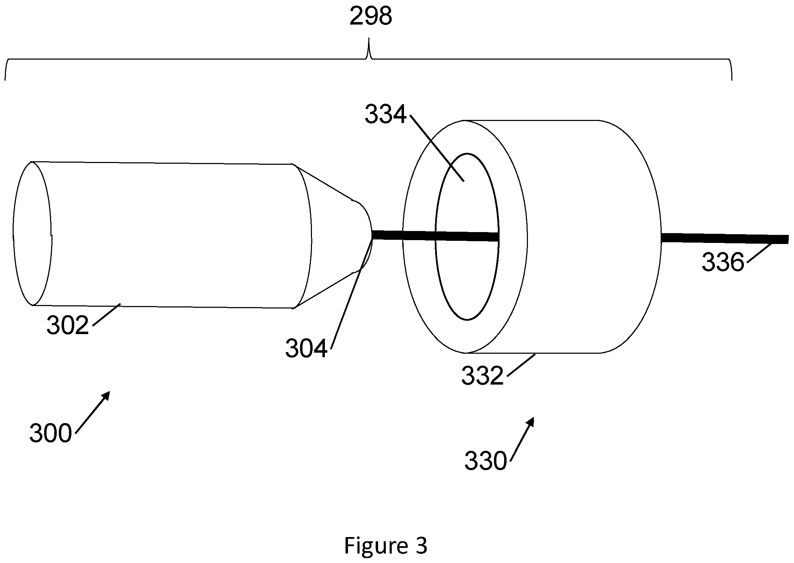

Turning now to Figure 3, a portion of a wireless power transfer system 298 in accordance with an aspect of the disclosure is illustrated. The system 298 comprises a receiver 300 for receiving electrical power transferred via magnetic field coupling from a field generated by a transmitter 330. While not shown in Figure 3, the system 298 may additionally comprise a crane for lifting the receiver 300 into alignment with the transmitter 330 as will be described. The system 298 may allow for a battery associated with the receiver 300 to be wirelessly charged when the receiver 300 is aligned with the transmitter 330 as will be described. This may allow for automated charging of the battery and therefore redeployment of the described module without the need for manual human intervention. In other words, the module may be used for a period until the battery requires charging. The module may then be remove from its location of operation, e.g., subsea or at sea level, re-charged and redeployed. All of these steps may be accomplished autonomously, without the need for manual human intervention.

The receiver 300 may be associated or comprise a sensor module, i.e., a module adapted for underwater or at water level use. The sensor module may comprise a load which may include one or more sensors for detecting parameters such as pressure, resistivity, resistance, conductivity, salinity, etc. The load may further comprise a rechargeable battery for powering elements of the sensor module such as the sensors.

The module may be sealed such that fluid ingress is prevented from damaging internal components.

While not shown in the illustrated arrangement, the receiver 300 may comprise electronics for processing wirelessly extracted electrical power. Such electronics include a rectifier, and DC/DC converter. The rectifier may comprise applicant's own synchronous rectifier described in US Patent No 11637453 B2.

As illustrated in Figure 3, the receiver 300 further comprises a receiving housing 302. In the illustrated arrangement, the receiver housing is generally cylindrical having cylinder portion with two end faces on either end. The receiver 300 further comprises a fastener 304. In the illustrated arrangement, the fastener 304 comprises a frustum. The fastener 304 is connectable to a cable 336 for positioning the receiver 300 within an opening or channel 334 of a transmitter 330 as will be described. As shown, the fastener 304 is centrally located (radially) on the receiver 300. This cable 336 is thus centrally 336 within the channel 334 of the transmitter 330 when connected to the fastener 304. This ensures that the receiver 300 is centrally aligned relative to the channel 334 of the transmitter 330. The fastener 304 may of a standard used for deployment ocean sensors.

The wireless power transfer system 298 further comprises a transmitter 330. The transmitter 330 is adapted to generate a magnetic field for transferring electrical power to the receiver 300 via magnetic field coupling. While not shown in Figure 3, the transmitter 330 receives a power signal from a power source, e.g., power source 212. The transmitter 330 may comprise electronics such as DC/DC converter, inverter, etc.

The transmitter 330 comprises a transmitter housing 332 which comprises a hollow cylinder comprising an opening or channel 334. The channel 334 is sized such that the receiver housing 302 can fit within the transmitter housing 332. The radius of the channel 334 or inner radius of the transmitter housing 334 is larger than the radius of the receiver housing 302.

During operation, the fastener 304 of the receiver 300 is connected to the cable 336. The cable 336, which is affixed to a crane or other lifting mechanism (not shown), pulls the receiver 300 toward the transmitter 330, e.g., out of the water, and into the channel 334. This may comprise pulling the receiver 300 upward and into the channel 334.The cable 336 positions the receiver 300 within the channel 334 of the transmitter housing 332. As will be described, the receiver 300 is positioned such that a receiver coil and a transmitter coil are aligned to maximise wireless power transfer from the transmitter 330 to the receiver 300.

While not illustrated in Figure 3, in the illustrated arrangement the receiver 300 comprises a communication component for communicating a rectified voltage at the receiver 300 to the transmitter 330. The transmitter 330 similarly comprises a communication component for receiving the rectified voltage communicated from the receiver 300.

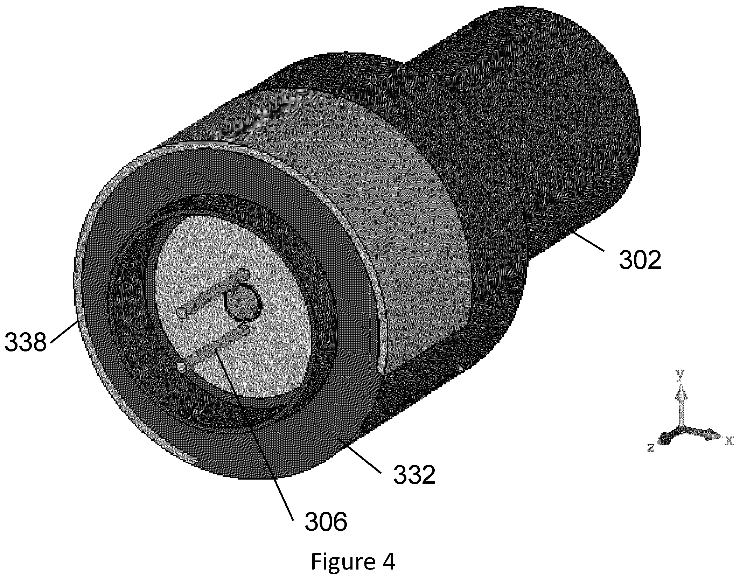

Turning now to Figures 4-6, the transmitter 330 and receiver 300 are illustrated with the receiver 300 positioned within the channel 334. In the illustrated arrangement, the fastener 304 is removed to reveal a connector 306 which connects the fastener 304 to the receiver housing 302. Further, the transmitter 330 comprises a shield 338 positioned on an outer surface of the transmitter housing 332. The shield 338 is adapted to inhibit the spread of the magnetic field generated by the transmitter 330. In the illustrated arrangement, the shield 338 ring shaped and partially circumscribes the outer surface of the transmitter housing 332. The shield 338 does not completely enclose the transmitter housing 332 to allow for electronics to be mounted to the outer surface of the transmitter housing 332. The electronics may be enclosed within a similarly shielded enclosure to inhibit spread of the magnetic field generated by the transmitter 330 beyond the transmitter housing 332 and channel 334.

The shield 338 and the accompanying shielded enclosure of the transmitter housing 332 allows for the transmitter 330 to be placed anywhere while inhibiting the spread of the magnetic field generated by the transmitter 330. The shield 338 isolates the transmitter components, e.g., coil, electronics, etc. This protects the transmitter components from being detuned or electrical operating parameters from being altered by nearby equipment. This includes any metal structures. For example, the transmitter 330 may be placed on a vessel, e.g., an autonomous charging vessel, which include other electronics related to navigation, communication and propulsion. These electronics may be sensitive to magnetic fields. As the transmitter 330 is shielded in the manner described, these electronics may be protected from damage ensuring the vessel can operate regardless of where the transmitter 330 is placed on the vessel. This includes placing the transmitter 330 near metal structures which usually negatively impact magnetic fields and associated electronics.

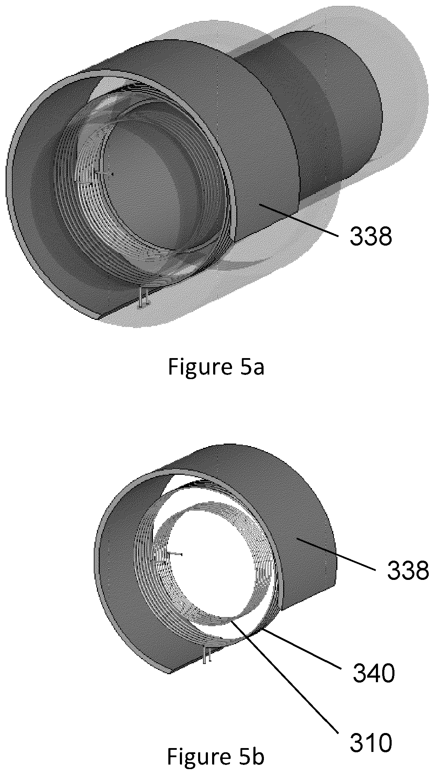

As illustrated in Figures 5a and 5b, the transmitter 330 comprises a transmitter coil 340. The transmitter coil 340 comprises a plurality of windings. The transmitter coil 340 is positioned within the transmitter housing 332 proximate in the inner wall or surface of the cylindrical portion of the transmitter housing 332. The transmitter coil 340 is configured to generate a magnetic field to transfer power to the receiver 300 via magnetic field coupling.

The receiver 300 similarly comprises a receiver coil 310. The receiver coil 310 is positioned within the receiver housing 302 proximate the outer wall or surface of the cylindrical portion of the receiver housing 302. The receiver coil 310 is configured to extract power from a magnetic field generated by the transmitter coil 340 via magnetic field coupling.

The transmitter 300 and receiver 330 may comprise one or more capacitors electrically connected to the respective coils 340, 310 such that the transmitter and receiver coils 340, 310 are resonant at a resonant frequency.

Once the receiver 300 is positioned within the channel 334 of the transmitter housing 332, the receiver coil 310 may be at least partially aligned with the transmitter coil 340. For the purposes of the subject disclosure, alignment may refer to alignment between the coils 310, 340 in the radial plane defined by the cylindrical housing 302, 332. In other words, the coils 310, 340 may be aligned when they are in the same radial plane based on placement of the receiver housing 302 within the channel 334 of the transmitter housing 332. Power transfer efficiency may be maximised when the coils 310, 340 are aligned. Partial alignment may refer to a degree of tolerance from the aligned position in which power transfer is still possible between the coils 310, 340. As such, the coils 310, 340 may have an alignment zone in which power transfer is possible. In the aligned or fully aligned position, falling within the alignment zone, power transfer may be maximised as the coils 310, 340 are aligned in the radial plane. At other positions within the alignment zone, power transfer may be possible, but at a lower efficiency and/or power level than at the fully aligned position.

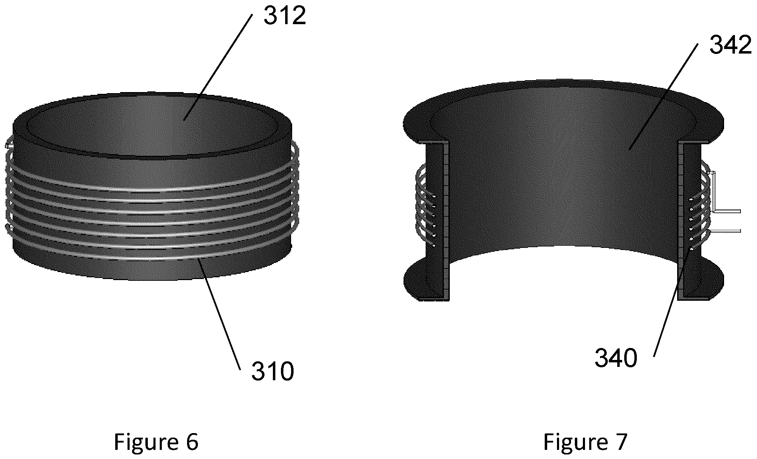

The coils 310, 340 may be secured within their respective housing 302, 332 by supports 312, 342 illustrated in Figures 6 and 7. As shown in Figure 6, the receiver 300 comprises receiver support 312 which secures the receiver coil 310 within the receiver housing 302. The receiver support 312 ensures the receiver coil 310 is stationary during movement of the receiver 300 to promote alignment with the transmitter coil 340, and to maximise power transfer from the transmitter coil 340. In the illustrated arrangement, the receiver support 312 is made of plastic and is a hollow cylinder although other configurations are possible. The windings of the receiver coil 310 are wrapped around the outer cylindrical surface of the receiver support 312.

As shown in Figure 7, the transmitter 330 comprises transmitter support 342 which secures the transmitter coil 340 within the transmitter housing 332. The transmitter support 342 ensures the transmitter coil 340 is stationary to promote alignment with the receiver coil 310, and to maximise power transfer to the receiver coil 310. In the illustrated arrangement, the transmitter support 342 is made of plastic and is a hollow cylinder although other configurations are possible.

The transmitter support 342 comprises rings affixed to a main cylindrical portion at opposite ends of the cylindrical portion. The rings are sized to span the radius distance of the transmitter housing 332. The windings of the transmitter coil 340 are wrapped around the outer cylindrical surface of the main cylindrical portion of the transmitter support 342. In this way, the transmitter coil 340 is proximate the inner surface or wall of the transmitter housing 332. The transmitter support 342 is plastic to reduce power losses and possible induced eddy currents.

The supports 312, 342 may comprise grooves or channels for the respective coils 310, 340. The windings of the coils 310, 340 may be positioned within the grooves to ensure precise positioning of the windings along the outer surface of the cylindrical portion of the supports 312, 342.

The supports 312, 342 may maximize power transfer efficiency and/or minimize variance by ensuring that the winding spacing and accordingly coil 310, 340 dimensions are accurate and reproducible.

The supports 312, 342 may be made of plastic to reduce power losses and possible induced eddy currents. Exemplary plastic includes Acrylonitrile butadiene styrene (ABS) or Nylon. In particular, ABS may exhibit lower power losses and/or reduced eddy currents than Nylon.

Additionally, the central opening in the supports 312, 342 may reduce the amount of material needed for the supports 312, 342. This may further minimize losses and/or maximizes power transfer efficiency.

The supports 312, 342 may be made of different materials as they may be subject to different environment. For example, the transmitter support 342 may need to be made of a tougher material and/or have a greater thickness than the receiver support 312 as it may operate in a harsher environment.

While certain supports 312, 342 are described, one of skill in the art will appreciate, other supports may be used, or the supports may be eliminated altogether. Further, the coils 310, 340 may be affixed to their respective housing surfaces via adhesives or other affixing means to promote respective alignment.

While not shown in Figures 3-7, the receiver 300 further comprises a metallic tube within the receiver housing 302. This metallic tube may prevent the receiver 300 from being inserted too far past an aligned position between the coils 310, 340 and/or the metallic tube may used to determine which direction to move the receiver 300 to align the coils 310, 340. The coils 310, 340 may be aligned such that power transfer from the transmitter 330 to receiver 300 commences. However, if the receiver 300 continues to be pulled up past the aligned position by the cable 336, the transmitter coil 340 may be aligned with the metallic tube within the receiver housing 302. The metallic tube causes an electrical fault in the power transfer circuitry of the transmitter 330 and trips the transmitter 330 to stop power transfer. This built-in protection prevents damage to the transmitter 330 and associated circuitry.

Further, the metallic tube may cause parameters to be detected by the transmitter 330. As the receiver 300 is inserted in the channel 334 a parameter may be detected at the transmitter 300, e.g., rectified voltage. The rectified voltage may increase as the receiver 300 approaches the aligned position, i.e., when the coils 310, 340 are radially aligned relative to the channel 334. At the aligned position the rectified voltage may be maximised. Once the aligned is passed, i.e., the receiver 300 continues through the channel 334, the rectified voltage may decrease. However, the presence of the metallic tube may cause the rectified voltage to decrease at different rate at one axial side of the receiver 300 compared to another. For example, the rectified voltage may increase at a rate of 1 V/cm on side of the aligned position, but decrease at a rate of 1.5 V/cm on the other side proximate the metallic tube. This information may be interpreted by a controller controlling the cable 336 and associated lifting mechanism. Based on this information, the lifting mechanism may determine the relative position of the receiver coil 310 to the transmitter coil 330 and move the receiver 300 appropriately.

For example, if a detected parameter, e.g., rectified voltage, is decreasing a faster rate, the lifting mechanism may stop moving the receiver 300 through the channel 334 and move the receiver 300 in the opposite direction.

During operation, the receiver 300 may be in use in a subsea or sea-level environment where one or more on board sensors are detecting characteristics of the environment or subsea equipment such as cabling, nets, or subsea structures. One or more batteries on board the receiver 300 may be in a state of low power such that they require recharging or replacement. The cable 336 may be connected to the fastener 304 of the receiver 300 to pull up the receiver 300 from the subsea environment. The cable 336 may be used to pull the receiver 300 through the channel 334 in the transmitter housing 332 of the transmitter 330. The cable 336 pulls the receiver through the channel 334 until the transmitter and receiver coils 340, 310 are in radial alignment to maximise wireless power transfer and wireless power efficiency.

Prior to the coils 340, 310 being aligned, the transmitter 330 operates in a low power mode where the transmitter coil 340 generates a low power magnetic field. This is sufficient power such that when the receiver coil 310 is approaching radial alignment with the transmitter coil 340, the receiver coil 310 receives enough electrical power via magnetic field coupling to communicate with the transmitter 330. In this misaligned zone (i.e., the coils 310, 340 are not in radial alignment), the receiver communication component communicates a parameter to the transmitter communication component. In this arrangement, the parameter is the rectified voltage at the receiver coil 310. Once the coils 310, 340 are aligned (i.e., the aligned zone), the rectified voltage communicated to the transmitter communication component increases. In particular, when the coils 310, 340 are in the aligned position within the aligned zone, the rectified voltage reaches a maximum value, i.e., peaks. In response to this increase, the transmitter 330 changes modes from the low power (search) mode to the high power transfer mode. In this mode, the transmitter 330 transfers the full power signal, which is higher than the search power signal, to the receiver 300 as the coils 310, 340 are aligned. Once the power signal ramps up from the low power search signal, the received rectified voltage at the receiver 300 similarly ramps up. Given the alignment between coils 310, 340, power transfer efficiency is maximised in the aligned zone.

Operating the transmitter 330 in a low power mode when the receiver 300 is not present will save energy use at the transmitter 330. Additionally, the transmitter 330 may stay cooler in the low power mode compared to the high power mode. This may extend the life of the transmitter 330 and associated internal electronics, e.g., inverter switches.

If the cable 336 pulls the receiver 300 out of the aligned position between the coils 310, 340 the transmitter coil 340 may continue to transfer power to the receiver coil 310, but may do so at a reduced power transfer efficiency. However, upon continually moving to the point of moving out of the aligned zone. If the movement is in one direction the transmitter coil 340 will eventually be radially aligned with the metallic tube within the receiver 300. Once aligned with this metallic tube, circuitry associated with the power transfer in the transmitter 330 trips due to an electrical fault between the transmitter coil 340 and the metallic tube, and power transfer is stopped. This prevents damage to the transmitter 330 and associated circuitry.

As described above, the metallic tube may provide information as to which direction to move the receiver 300 to align the coils 310, 340. The metallic tube may impact the rate of change of the detected parameter which may be interpreted to indicate which direction to move the receiver 300 to move back into the aligned zone and to the aligned position between the coils 310, 340.

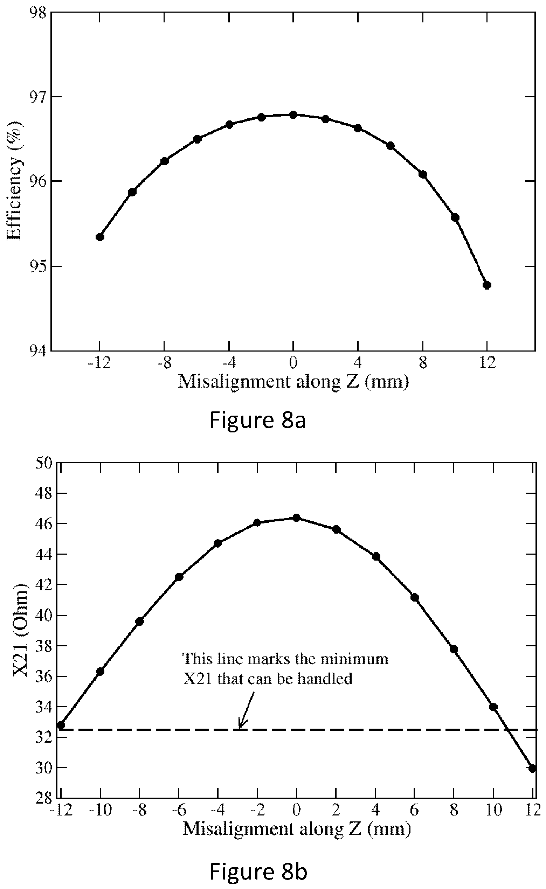

An exemplary wireless power transfer system 298 was tested. In this arrangement, the transmitter 330 is configured to transfer 15 watts of power at the higher power level. Figure 8a is a plot of radio frequency (RF) efficiency compared to axial misalignment of the coils 310, 340 along the axial axis (z axis shown in Figure 4) of the transmitter 330 and receiver 300. Figure 8b is a plot of coupling impedance (X21) compared to axial misalignment of the coils 310, 340 along the axial axis (z axis shown in Figure 4) of the transmitter 330 and receiver 300. While power transfer of 15 watts is described, one of skill in the art will appreciate other power levels may be transferred, e.g., 60 W, 7.5 W.

As shown in Figure 8a, power transfer efficiency is maximised when the coils 310, 340 are aligned. However, power transfer efficiency is still above 96% when alignment is less than ± 10 mm. In Figure 8b, coupling impedance (X21) is maximised when the coils 310, 340 are aligned. As illustrated in Figures 8a and 8b, coupling impedance (X21) and power transfer efficiency are maximised when the coils 310, 340 are aligned.

While it may be presumed that power transfer from the transmitter 330 to the receiver 300 takes place on a surface of a vessel, one of skill in the art will appreciate this is not necessarily the case. Power may be transferred in a subsea environment such that the receiver 300 needs not be removed from the water to charge an on-board power source. This may have advantages as the subsea environment may be preferred to on a vessel given adverse weather conditions such as high winds. The described shielding of the transmitter 330 may permit power transfer in a subsea environment without power transfer efficiency being affected by surrounding sea water.

It should be understood that the examples provided are merely exemplary present of the present disclosure, and that various modifications may be made thereto.

## Claims

1. A module adapted for underwater use comprising a cylindrical housing enclosing a receiver (300) of a wireless power transfer system (298), the receiver (300) comprising a receiver coil (310) positioned adjacent an inner surface of the cylindrical housing and radially aligned with the cylindrical housing, the receiver coil (310) for extracting power from a field generated by a transmitter coil (340) of a transmitter (330) of a wireless power transfer system (298) when the transmitter coil (340) at least partially surrounds the cylindrical housing and is radially aligned with the receiver coil (310).

2. The module of claim 1, wherein the receiver coil (310) comprises a plurality of windings.

3. The module of claim 2, wherein at least one of:
the windings are positioned adjacent the inner surface of the cylindrical housing and radially aligned with the cylindrical housing; and
each winding of the plurality of windings is positioned adjacent the inner surface of the cylindrical housing and radially aligned with the cylindrical housing.

4. The module of claim 2 or 3, wherein the receiver coil (310) is adapted to extract power from a field generated by a transmitter coil when a plurality of windings of the transmitter coil at least partially surrounds the cylindrical housing and is radially aligned with the plurality of windings of the receiver coil (310).

5. The module of any of claims 1 to 4, further comprising:
a metallic element within the cylindrical housing for protecting a transmitter (330) of a wireless power transfer system (298) from electrical damage, and optionally wherein the metallic element comprises a tube.

6. The module of claim 5, wherein at least one of:
the metallic element couples to a transmitter coil (340) of a transmitter (330) of a wireless power transfer system (298) when the transmitter coil (340) at least partially surrounds the cylindrical housing and is radially aligned with the metallic element, and optionally wherein coupling of the metallic element and transmitter coil (340) results in an electrical fault at the transmitter (330); and
the metallic element is positioned within an end portion of the cylindrical housing.

7. The module of any preceding claim, wherein the housing comprises a fastener for connection to a cable for extracting the housing from an environment, and optionally: wherein the fastener extends from an external surface of the housing, and/or wherein the fastener extends from an end face of the housing.

8. The module of any preceding claim, wherein the receiver (300) further comprises a load electrically connected to the receiver coil (310), and optionally wherein the load comprises a sensor.

9. A wireless power transfer system (298) comprising:
a transmitter (330) comprises a transmitter coil (340); and
a module adapted for underwater use comprising a cylindrical housing enclosing a receiver (300) of a wireless power transfer system, the receiver comprising a receiver coil (310) positioned adjacent an inner surface of the cylindrical housing and radially aligned with the cylindrical housing, the receiver coil (310) for extracting power from a field generated by the transmitter coil (340) when the transmitter coil (340) at least partially surrounds the cylindrical housing and is radially aligned with the receiver coil (310).

10. The system (298) of claim 9, further comprising:
a transmitter housing (332) enclosing the transmitter (330), and optionally wherein the transmitter housing is adapted to receive the cylindrical housing therein, and/or wherein an inner radius of the transmitter housing (332) is greater than an outer radius of the cylindrical housing.

11. The system (298) of claim 10, wherein the transmitter coil (340) is adjacent the inner surface of the transmitter housing (332) and radially aligned with the transmitter housing (332), and optionally wherein the transmitter coil (340) comprises a plurality of windings, and further optionally:
wherein the windings are positioned adjacent the inner surface of the transmitter housing (332) and radially aligned with the transmitter housing (332)
wherein each winding the plurality of windings is positioned adjacent the inner surface of the transmitter housing (332) and radially aligned with the transmitter housing (332), and optionally wherein the transmitter coil (340) is adapted to transfer power to the receiver (300) when the plurality of windings of the transmitter coil (340) at least partially surrounds the cylindrical housing and is radially aligned with the plurality of windings of the receiver coil (310).

12. The system (298) of any of claims 9 to 11, further comprising:
a lifting arrangement for lifting the module from an environment and positioning the cylindrical housing within the transmitter housing (332), and optionally wherein the lifting arrangement comprises a cable connectable to a connector associated with the cylindrical housing.

13. A method of transferring power wirelessly from a transmitter (330) to a receiver (300) of a wireless power transfer system (298), the receiver (300) comprising a receiver coil (310), the receiver (300) enclosed in a cylindrical housing, the receiver coil (310) positioned adjacent an inner surface of the cylindrical housing and radially aligned with the cylindrical housing, the method comprising:
extracting power, via the receiver coil (310), from a field generated by a transmitter coil (340) of the transmitter (300) when the transmitter coil (340) at least partially surrounds the cylindrical housing and is radially aligned with the receiver coil (310).

14. The method of claim 13, further comprising at least one of:
detecting, at the receiver (300), that the transmitter coil (340) at least partially surrounds the cylindrical housing and is radially aligned with the receiver coil (310);
communicating, from the receiver to the transmitter (330), a parameter of a wireless link between the transmitter and receiver coils (310, 340), and optionally transitioning, at the transmitter (330), from a search mode to a power transfer mode in response to receiving the communicated parameter;
positioning the cylindrical housing within a transmitter housing (332) enclosing the transmitter (330) to at least partially surround the cylindrical housing with the transmitter coil (340) and radially align the transmitter coil (340) with the receiver coil (310); and
positioning the cylindrical housing within a transmitter housing (332) enclosing the transmitter (330) to at least partially surround a portion of the cylindrical housing enclosing a metallic element, and optionally, in response to the positioning, tripping the transmitter (300) to stop generating a field for wireless power transfer.

15. A controller adapted to perform the method of claim 13 or 14.
